(19) Europäisches Patentamt
European Patent Office
Office européen des brevets

(11) **EP 3 545 345 B1**

(12) **EUROPEAN PATENT SPECIFICATION**

(45) Date of publication and mention
of the grant of the patent:
**02.11.2022 Bulletin 2022/44**

(21) Application number: **17873784.7**

(22) Date of filing: **20.09.2017**

(51) International Patent Classification (IPC):
**G02B 5/30** *(2006.01)*   **G02B 1/113** *(2015.01)*

(52) Cooperative Patent Classification (CPC):
**G02B 5/3058**

(86) International application number:
**PCT/US2017/052471**

(87) International publication number:
**WO 2018/097878 (31.05.2018 Gazette 2018/22)**

(54) **WIRE GRID POLARIZER HEAT SINK**

KÜHLKÖRPER FÜR DRAHTGITTERPOLARISATOR

DISSIPATEUR THERMIQUE DE POLARISEUR EN GRILLE MÉTALLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2016 US 201662425339 P
23.06.2017 US 201715631256
30.08.2017 US 201715691315
19.09.2017 US 201715709127**

(43) Date of publication of application:
**02.10.2019 Bulletin 2019/40**

(73) Proprietor: **Moxtek, Inc.
Orem, UT 84057 (US)**

(72) Inventors:
• **NIELSON, R. Stewart
Pleasant Grove, Utah 84062 (US)**
• **OGDEN, Shaun
Saratoga Springs, Utah 84045 (US)**
• **FREE, Mathew
Orem, Utah 84058 (US)**
• **WILLIAMS, Bradley R.
Pocatello, Idaho 83204 (US)**
• **LANE, Fred
Lindon, Utah 84042 (US)**
• **WANGENSTEEN, Ted
Pleasant Grove, Utah 84062 (US)**
• **GEORGE, Matthew C.
Murray, UT 84107 (US)**

(74) Representative: **Appleyard Lees IP LLP
15 Clare Road
Halifax HX1 2HY (GB)**

(56) References cited:
EP-A1- 3 078 995   WO-A1-2015/199948
US-A1- 2008 310 020   US-A1- 2008 316 599
US-A1- 2012 008 205   US-A1- 2012 075 699
US-A1- 2015 062 500   US-A1- 2016 062 017
US-B1- 8 576 672   US-E- R E45 642

**Description**

FIELD OF THE INVENTION

The present application is related generally to wire gird polarizers.

BACKGROUND

A wire grid polarizer (WGP) can be used in an application with high temperatures, such as for example computer projectors. As computer projectors decrease in size and increase in brightness, due to customer demand, the need for WGPs that can endure a high temperature environment also increases.

Selectively-absorptive WGPs are particularly susceptible to damage in high-light-intensity computer projectors because they absorb a large percent of incident light. Such WGPs typically have wires that include a reflective portion (e.g. aluminum) and an absorptive portion (e.g. silicon). The absorptive portion can absorb about 80% of one polarization of light, and thus about 40% of the total amount of light. Much of the heat from this absorbed light conducts to the reflective portion of the wire, which can melt, thus destroying the WGP. Such a wire grid polarizer is disclosed by WO 2015/199948 A1.

SUMMARY

It has been recognized that it would be advantageous to provide a wire grid polarizer (WGP) that can endure high temperatures. The present invention is directed to various embodiments of WGPs that satisfy this need and is defined by the appended claims.

The WGP can comprise an array of wires over a face of a transparent substrate, with channels between adjacent wires. Each of the wires can include a reflective layer and an absorptive layer. The WGP can further comprise a heat-dissipation layer, which can be located over the array of wires between the array of wires and the transparent substrate. The heat-dissipation layer can be a continuous layer. The heat-dissipation layer can have a high electrical resistivity and a high coefficient of thermal conductivity.

BRIEF DESCRIPTION OF THE DRAWINGS (drawings might not be drawn to scale)

FIG. 1 is a schematic, cross-sectional side-view of a wire grid polarizer (WGP) 10 comprising an array of wires 12 over a face $11_f$ of a transparent substrate 11, with channels 13 between adjacent wires 12, each of the wires 12 including a reflective layer 14 and an absorptive layer 15; a heat-dissipation layer 16 located over the array of wires 12; and the absorptive layer 15 sandwiched between the reflective layer 14 and the heat-dissipation layer 16, in accordance with an embodiment of the present invention.

FIG. 2 is a schematic, cross-sectional side-view of WGP 20, similar to WGP 10, but with the heat-dissipation layer 16 extending into the channels 13 and along sides of the absorptive layer 15 to directly contact the reflective layer 14, in accordance with an embodiment of the present invention.

FIG. 3 is a schematic, cross-sectional side-view of WGP 30, similar to WGP 10, but with the reflective layer 14 sandwiched between the absorptive layer 15 and the heat-dissipation layer 16, in accordance with an embodiment of the present invention.

FIG. 4 is a schematic, cross-sectional side-view of WGP 40, similar to WGPs 10, 20, and 30, but with the heat-dissipation layer 16 extending into and filling the channels 13, in accordance with an embodiment of the present invention.

FIG. 5 is a schematic, cross-sectional side-view of WGP 50, similar to WGP 10, except that each of the wires 12 further comprises a thermal-insulating layer 18 sandwiched between the reflective layer 14 and the absorptive layer 15, in accordance with an embodiment of the present invention.

FIG. 6 is a schematic, cross-sectional side-view of WGP 60, similar to WGP 10, except that the heat-dissipation layer 16 is sandwiched between the array of wires 12 and the transparent substrate 11, with the absorptive layer 15 sandwiched between the reflective layer 14 and the heat-dissipation layer 16, in accordance with an embodiment of the present invention.

FIG. 7 is a schematic, cross-sectional side-view of WGP 70, similar to WGP 60, but with the reflective layer 14 sandwiched between the absorptive layer 15 and the heat-dissipation layer 16, in accordance with an embodiment of the present invention.

FIG. 8 is a schematic, cross-sectional side-view of WGP 80, similar to WGP 60, except that each of the wires 12 further comprises a thermal-insulating layer 18 sandwiched between the reflective layer 14 and the absorptive layer 15, in accordance with an embodiment of the present invention.

FIG. 9 is a schematic, cross-sectional side-view of WGP 90, similar to WGP 10, but further comprising a second absorptive layer $15_b$ and a second heat-dissipation layer $16_b$, in accordance with an embodiment of the present invention.

FIG. 10 is a schematic, cross-sectional side-view of WGP 100, similar to WGP 90, but with the heat-dissipation layer 16 extending into the channels 13 and along sides $15_s$ of the absorptive layer 15 to directly contact the reflective layer 14, in accordance with an embodiment of the present invention.

FIG. 11 is a schematic, cross-sectional side-view of WGP 110, similar to WGP 90, except that each of the wires 12 further comprises thermal-insulating layers 18 sandwiched between the reflective layer 14 and each adjacent absorptive layer 15, in accordance with an embodiment of the present invention.

FIG. 12 is a schematic, cross-sectional side-view of WGP 120, similar to other WGPs described herein, but further comprising heat sinks 121, in accordance with an embodiment of the present invention.

FIG. 13 is a schematic, cross-sectional side-view of WGP 130, similar to other WGPs described herein, but further comprising an antireflection layer 131 including multiple thin-film layers 132 located on the heat-dissipation layer 16, in accordance with an embodiment of the present invention.

FIG. 14 is a schematic, cross-sectional side-view of WGP 140, similar to other WGPs described herein, but further comprising an antireflection layer 131 including multiple protrusions 142 located on the heat-dissipation layer 16, in accordance with an embodiment of the present invention.

FIG. 15 is a schematic, perspective view of WGP 150, similar to other WGPs described herein, but without the heat-dissipation layer 16 in order to clearly show the structure of the array of wires 12, in accordance with an embodiment of the present invention.

FIG. 16 is a schematic, cross-sectional side-view of WGP 160, with a continuous thin film layer 161 sandwiched between the reflective layer 14 and the absorptive layer 15, forming two separate and distinct arrays of wires 12a and 12b.

DEFINITIONS

As used herein, the terms "on", "located on", "located at", and "located over" mean located directly on or located over with some other material between. The terms "located directly on", "adjoin", "adjoins", and "adjoining" mean direct and immediate contact with no other solid material between.

As used herein "continuous" means a layer which may include some discontinuity, such as pinholes, but no major discontinuity, such as a division into a grid or separate wires.

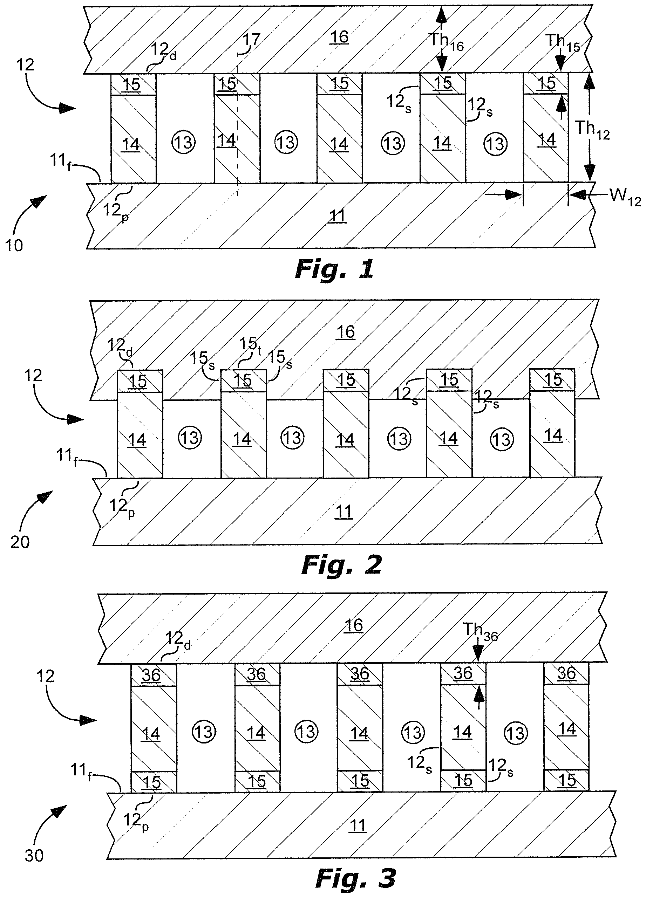

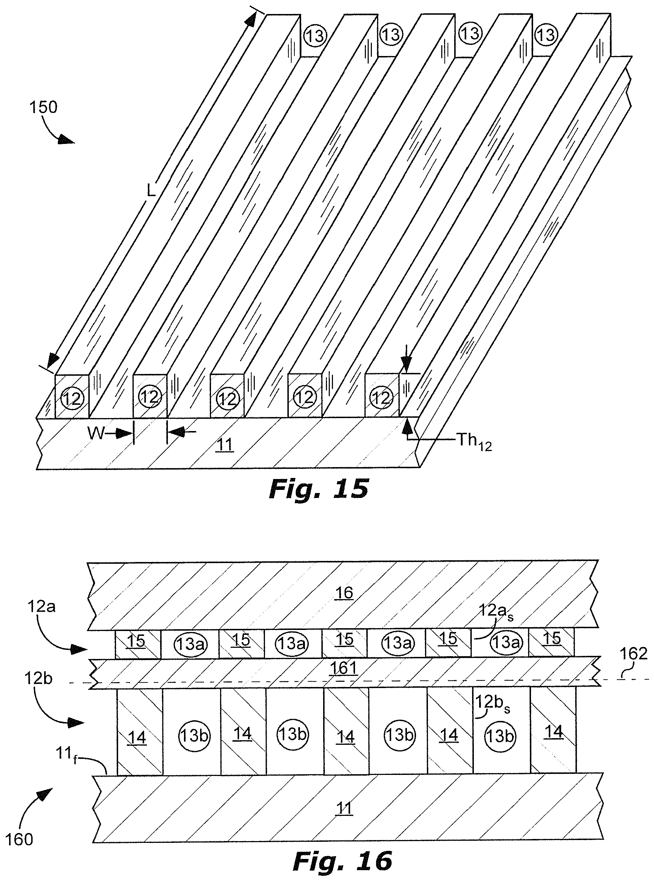

As used herein, the term "elongated" means that a length L of the wires 12 (length extending into the page of FIGs. 1-14 & 16 and also shown in the perspective view of FIG. 15), is substantially greater than wire width $W_{12}$ or wire thickness $Th_{12}$ (e.g. L can be at least 10 times, at least 100 times, at least 1000 times, or at least 10,000 times larger than wire width $W_{12}$ and/or wire thickness $Th_{12}$).

As used herein, the terms "fill", "fills", and "filling", as in "fills the channels" mean completely fills, fills within normal manufacturing tolerances, or nearly completely fills, such that any deviation from completely fills would have negligible effect for ordinary use of the device.

As used herein, the term "parallel" means exactly parallel, parallel within normal manufacturing tolerances, or nearly parallel, such that any deviation from exactly parallel would have negligible effect for ordinary use of the device.

As used herein, the term "thermal contact" means that the devices in thermal contact with each other are (a) directly touching; or (b) not directly touching but all material(s) between the devices have a coefficient of thermal conductivity of at least 2.0 W/(m*K).

As used herein, the term "optical thin film" means a thin layer having a thickness less than 10 $\mu$m, less than 1 $\mu$m, less than 0.5 $\mu$m, or less than 0.3 $\mu$m, depending on the light spectrum of interest.

Materials used in optical structures can absorb some light, reflect some light, and transmit some light. The following definitions distinguish between materials that are primarily absorptive, primarily reflective, or primarily transparent. Each material can be considered to be absorptive, reflective, or transparent in a specific wavelength range (e.g. ultraviolet, visible, or infrared spectrum) and can have a different property in a different wavelength range. Such materials are divided into absorptive, reflective, and transparent based on reflectance R, the real part of the refractive index n, and the imaginary part of the refractive index / extinction coefficient k. Equation 1 is used to determine the reflectance R of the interface between air and a uniform slab of the material at normal incidence:

$$\text{Equation 1: } R = \frac{(n-1)^2 + k^2}{(n+1)^2 + k^2}$$

Unless explicitly specified otherwise herein, materials with $k \leq 0.1$ in the specified wavelength range are "transparent" materials, materials with $k > 0.1$ and $R \leq 0.6$ in the specified wavelength range are "absorptive" materials, and materials with $k > 0.1$ and $R > 0.6$ in the specified wavelength range are "reflective" materials.

DETAILED DESCRIPTION

As illustrated in FIGs. 1-14, wire grid polarizers (WGPs for plural or WGP for singular) 10, 20, 30, 40, 50, 60, 70, 80, 90, 100, 110, 120, 130, and 140, each configured to polarize light incident thereon, are shown comprising an array of wires 12 over a face $11_f$ of a transparent substrate 11, with channels 13 between adjacent wires 12. Each of the wires 12 can include a reflective layer 14 and an absorptive layer 15. The array of wires 12 can be elongated and parallel.

For each wire 12, the reflective layer 14 and the absorptive layer 15 can be aligned with a plane 17 that is perpendicular to the face $11_f$ of the transparent substrate 11 and parallel to the length L of the wires 12. Thus, each plane 17 can pass through both the reflective layer 14 and the absorptive layer 15 for the respective wire 12. Sides $12_s$ of each wire 12 can be parallel to the plane 17.

As shown in FIGs. 1-14 & 16, the WGPs can further comprise heat-dissipation layer(s) 16. The heat-dissipation layer 16 can be an optical thin film and can be a continuous layer. The heat-dissipation layer 16 can draw heat away from the array of wires 12, and can conduct this heat to an external heat sink 121 as described below, or can transfer this heat away from the WGP by convection or radiation. For example, the absorptive layer 15 can generate heat from absorbed light and the heat-dissipation layer 16 can conduct this heat away from the reflective layer 14.

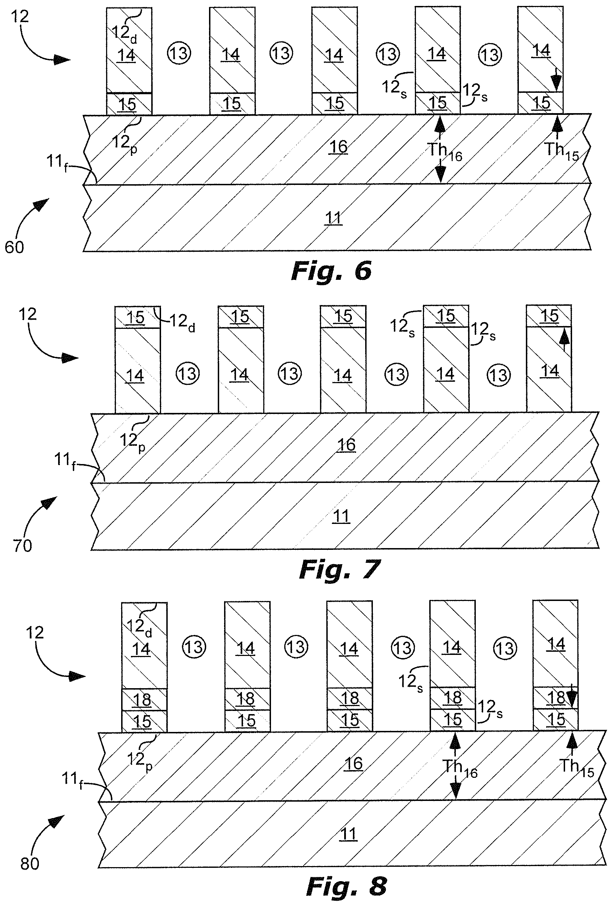

As shown in FIGs. 1-5 & 13-14, the heat-dissipation layer 16 can be located over the array of wires 12 and farther from the transparent substrate 11 than the array of wires 12. As shown in FIGs. 6-8, the heat-dissipation layer 16 can be located or sandwiched between the array of wires 12 and the transparent substrate 11.

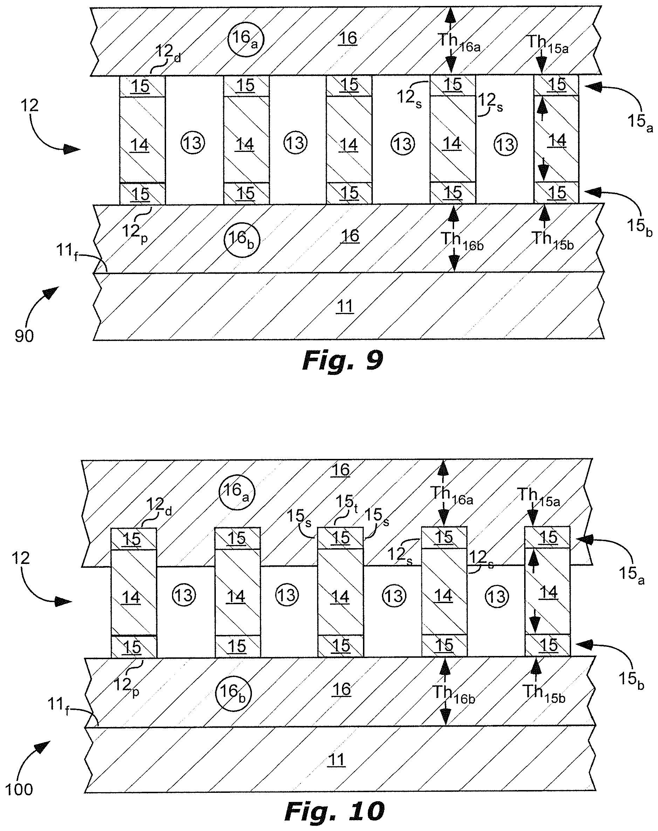

As shown on WGPs 90 and 100 in FIGs. 9-10, each wire 12 can include a first absorptive layer $15_a$ and a second absorptive layer $15_b$ with the reflective layer 14 sandwiched between. WGPs 90 and 100 include two heat-dissipation layers 16, including a first heat-dissipation layer $16_a$ located over the array of wires 12 and farther from transparent substrate 11 and a second heat-dissipation layer $16_b$ located under the array of wires 12 and closer to transparent substrate 11. The array of wires 12 can be sandwiched between the first heat-dissipation layer $16_a$ and the second heat-dissipation layer $16_b$ with the first absorptive layer $15_a$ located closer to the first heat-dissipation layer $16_a$ and the second absorptive layer $15_b$ located closer to the second heat-dissipation layer $16_b$.

A decision of where to locate the heat-dissipation layer 16 and the number of heat-dissipation layers 16 can be made based on direction of incident light, amount of heat that must be dissipated, manufacturability, and performance requirements of the WGP.

The heat-dissipation layer 16 can have high electrical resistivity in order to electrically isolate each wire 12 from adjacent wires 12. For example, the heat-dissipation layer 16 can have an electrical resistivity of > $10^4$ Ω*cm, > $10^5$ Ω*cm, > $10^6$ Ω*cm, > $10^7$ Ω*cm, > $10^8$ Ω*cm, > $10^9$ Ω*cm, or > $10^{10}$ Ω*cm. All electrical resistivity values specified herein are measured at 20 °C.

The heat-dissipation layer 16 can have a high coefficient of thermal conductivity k to effectively conduct heat away from the array of wires 12. For example, the heat-dissipation layer 16 can have a coefficient of thermal conductivity k of > 5 W/(m*K), > 10 W/(m*K), > 15 W/(m*K), > 20 W/(m*K), or > 25 W/(m*K). All coefficient of thermal conductivity k values specified herein are measured at 25 °C.

One example of a material that meets the above requirements of a heat-dissipation layer 16 is aluminum oxide. For example, the heat-dissipation layer 16 can comprise ≥ 50%, ≥ 75%, ≥ 90%, ≥ 95%, or ≥ 99% aluminum oxide. Due to imperfections in deposition of material, aluminum oxide can be deposited in nonstoichiometric ratios. Therefore, the term aluminum oxide ($Al_2O_3$) used herein means approximately two aluminum atoms for every three oxygen atoms, such as for example $Al_xO_y$, where 1.9≤x≤2.1 and 2.9≤y≤3.1.

The array of wires 12 and the heat-dissipation layer 16 can be made of or can include materials for polarization of light, including metals and/or dielectrics, as are typically used in wires of wire grid polarizers. See for example US 7,961,393 and US 8,755,113, which are incorporated herein by reference.

As shown in FIG. 1, 3, 5, 9, and 11-12, the heat-dissipation layer 16 can span the channels 13 and not extend into the channels 13, or extend only minimally into the channels 13. The channels 13 can be air filled.

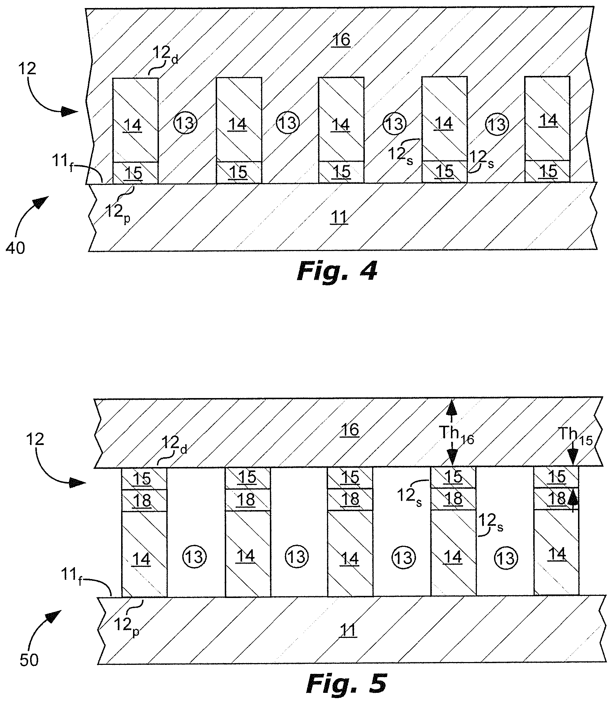

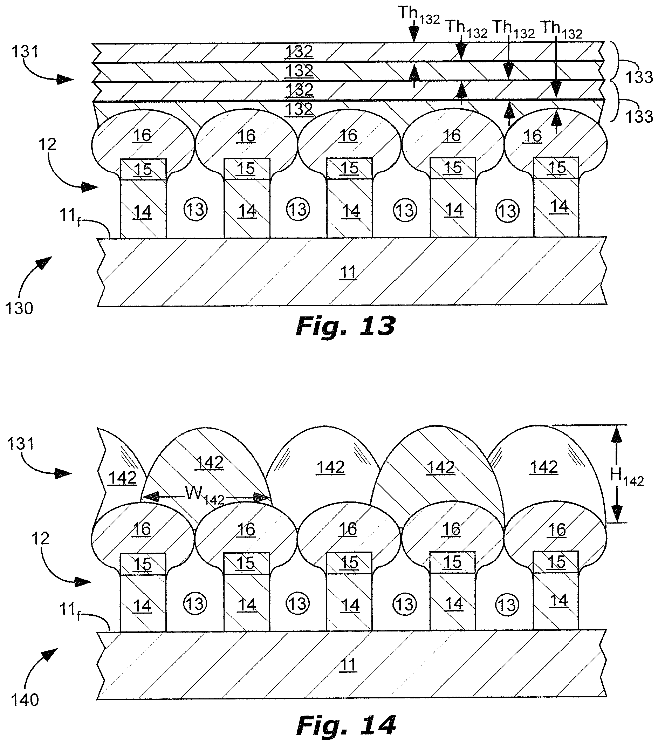

As shown in FIGs. 2, 10, and 13-14, the heat-dissipation layer 16 can extend partially into the channels 13 and the channels 13 can be partially air filled. The channels 13 can be mostly filled with the heat-dissipation layer 16 or mostly air filled. Having the channels 13 partially filled with the heat dissipation layer 16 can be particularly beneficial if the absorptive layer 15 is sandwiched between the reflective layer 14 and the heat-dissipation layer 16 and the heat-dissipation layer 16 extends into the channels 13 and along sides of the absorptive layer 15 to directly contact the reflective layer 14. WGPs 130 and 140 in FIGs. 13-14 with a match head shaped heat-dissipation layer 16 on each wire 12, grown together to form a continuous thin film, is a typical shape. This shape is beneficial for (a) a large area of contact between the absorptive layer 15 and the heat-dissipation layer 16 and (b) for increasing the area for convective and radiation heat transfer away from the heat-dissipation layer 16 (due to the wavy or curved shape on the outer surface). Manufacture of this shaped layer described in patent publication US 2012/0075699, which is incorporated herein by reference. As shown in FIG. 4, the heat-dissipation layer can 16 extend into and can fill the channels 13.

WGP 160 of FIG. 16 includes a continuous layer 161, in a plane 162 parallel to the face $11_f$ of the transparent substrate 11, sandwiched between the reflective layer 14 and the absorptive layer 15. Therefore, instead of having a single array of wires 12, as shown in FIGs. 1-14, this continuous layer 161 creates two, separate arrays of wires 12a and 12b. A sidewall $12a_s$ of the upper array of wires 12a is interrupted from a sidewall $12b_s$ of the lower array of wires 12b by this continuous layer 161. This continuous layer 161 can interfere with proper performance of the WGP and can create manufacturing difficulties. Furthermore, channels 13a between the upper array of wires 12a are separate from channels 13b of the lower array of wires 12b, and thus a single channel does not extend across both the reflective layer 14 and the absorptive layer 15.

In contrast, sidewalls $12_s$ of each of the wires 12 of the WGPs in FIGs. 1-14 extend from the reflective layer 14 to the absorptive layer 15 uninterrupted by any continuous layer in a plane 162 parallel to the face of the transparent substrate 17. Thus, each reflective layer 14 is paired with an absorptive layer 15 in each wire 12. Also, each of the channels 13 can extend from a proximal end $12_p$ of the array of wires 12 closest to transparent substrate 11 to a distal end $12_d$ of the array of wires 12 farthest from transparent substrate 11.

In FIGs. 1-2, 5-6, and 8-14, the absorptive layer 15 is sandwiched between the reflective layer 14 and the heat-dissipation layer 16. In FIGs. 3-4 and 7, the reflective layer 14 is sandwiched between the absorptive layer 15 and the heat-dissipation layer 16. In FIGs. 3-4, 6, and 8, the absorptive layer 15 is located closer to the transparent substrate 11 than the reflective layer 14. A choice between these designs can be made based on manufacturability, performance requirements of the application, and amount of light that needs to be dissipated.

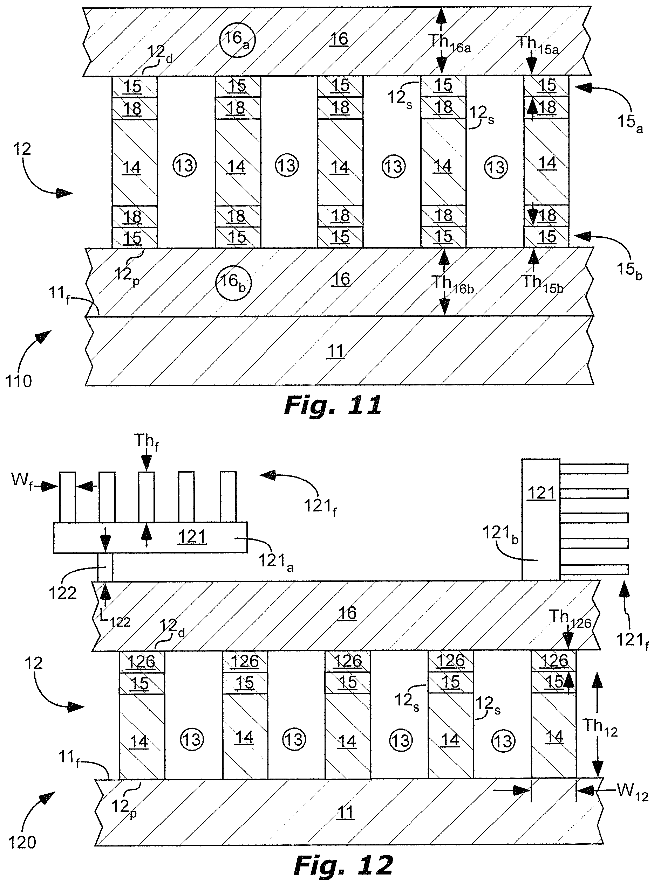

In order to allow sufficient removal of heat to the heat-dissipation layer 16, it can be beneficial to have minimal resistance to heat transfer between the absorptive layer 15 and the heat-dissipation layer 16. Therefore, the absorptive layer 15 can adjoin the heat-dissipation layer 16 as shown in FIGs. 1-2, 4-6, 8-11, and 13-14. Alternatively, the absorptive layer 15 can be separated from the heat-dissipation layer 16 by material (e.g. layer 126 in FIG. 12) having a small thermal resistance for heat conduction of a unit area ($R_A$), such as for example < $10^{-6}$ K*m$^2$/W, < $10^{-7}$ K*m$^2$/W, < $10^{-8}$ K*m$^2$/W, < $10^{-9}$ K*m$^2$/W, < $10^{-10}$ K*m$^2$/W. The term thermal resistance for heat conduction of a unit area ($R_A$) means a thickness (e.g. $Th_{126}$) of the material 126 divided by a coefficient of thermal conductivity ($k$). Thus, $R_A=Th/k$; so for a 100 nm thick layer of Al, $R_A=100$ nm/[205 W/(m*K)]= $5 \times 10^{-10}$ K*m$^2$/W; and for a 10 nm thick layer of SiO$_2$, $R_A=10$ nm/[0.96 W/(m*K)]= $10^{-8}$ K*m$^2$/W.

Alternatively or in addition, in order to allow sufficient removal of heat to the heat-dissipation layer 16, it can be beneficial to have minimal resistance to heat transfer between the reflective layer 14 and the heat-dissipation layer 16. Therefore, the reflective layer 14 can adjoin the heat-dissipation layer 16 as shown in FIGs. 2, 4, 7, 10, and 13-14. Alternatively, the reflective layer 14 can be separated from the heat-dissipation layer 16 by material (e.g. layer 36 in FIG. 3) having a small thermal resistance for heat conduction of a unit area ($R_A$), such as for example < $10^{-6}$ K*m$^2$/W, < $10^{-7}$ K*m$^2$/W, < $10^{-8}$ K*m$^2$/W, < $10^{-9}$ K*m$^2$/W, < $10^{-10}$ K*m$^2$/W.

Sometimes light is incident on the WGP in pulses and merely having a heat sink to store, then gradually dissipate, absorbed heat can be sufficient. The heat-dissipation layer 16 can be a heat sink for heat absorbed by the absorptive layer 15. Increased volume of the heat-dissipation layer 16 can be beneficial to allow sufficient volume for absorption of this heat. Thus, for example, a volume of the heat-dissipation layer 16 can be at least two times greater, at least three times greater, at least five times greater, at least eight times greater, at least twelve times greater, or at least eighteen times greater than a volume of the absorptive layer 15.

Another way to describe the added size of the heat-dissipation layer 16 is by its thickness $Th_{16}$ compared to a thickness $Th_{15}$ of the absorptive layer 15. The thickness $Th_{16}$ of the heat-dissipation layer 16 is a straight-line distance from a distal end $12_d$ of the array of wires 12 farthest from transparent substrate 11, to an outermost surface of the heat-dissipation layer 16. The thickness $Th_{15}$ of the absorptive layer 15 and the thickness $Th_{15}$ of the heat-dissipation layer 16 are both measured perpendicular to the face $11_f$ of a transparent substrate 11. Following are example relationships of these comparative thicknesses: $Th_{16} \geq 2*Th_{15}$, $Th_{15} \geq 3*Th_{15}$, $Th_{15} \geq 5*Th_{15}$, or $Th_{16} \geq 10*Th_{15}$. Following are example thicknesses of the absorptive layer 15 and the heat-dissipation layer 16: $Th_{15} \geq 5$ nm or $Th_{15} \geq 20$ nm; $Th_{15} \leq 200$ nm or $Th_{15} \leq 100$ nm; $Th_{16} \geq 50$ nm, $Th_{16} \geq 100$ nm, $Th_{16} \geq 200$ nm, or $Th_{16} \geq 400$ nm; and $Th_{16} \leq 2000$ nm, $Th_{16} \leq 1000$ nm, or $Th_{16} \leq 500$ nm.

For some applications, convective and/or radiative heat transfer away from the heat-dissipation layer 16 can keep the WGP at a sufficiently low temperature. For other applications, based on increased heat input and/or materials in the WGP with a lower melting temperature, conductive heat transfer to a heat sink might be needed. As shown in FIG. 12, a heat sink 121 can be coupled to the heat-dissipation layer 16 and can conduct heat away from the heat-dissipation layer 16, and thus away from the array of wires 12. The heat sink 121 can be located outside of the array of wires 12.

The heat sink 121 can comprise multiple fins $121_f$, such as for example at least five fins $121_f$ as shown in FIG. 12. Each of the fins $121_f$ can have a width $W_f$ and a thickness $Th_f$ much larger than the width $W_{12}$ and thickness $Th_{12}$ of the wires 12 and large enough to transfer heat from the WGP 120 to the surrounding air. For example, each of the fins $121_f$ can have a width $W_f$ of $\geq$ 0.01 mm, $\geq$ 0.1 mm, $\geq$ 1 mm, or $\geq 100*W_{12}$; and a thickness $Th_f$ of $\geq$ 0.1 mm, $\geq$ 2 mm, $\geq$ 6 mm, or $\geq 100*Th_{12}$. The heat sink 121, including the fins $121_f$, can have a high coefficient of thermal conductivity $k$, such as for example > 10 W/(m*K), > 40 W/(m*K), or > 60 W/(m*K), where W=watt, m=meter, and K=degrees Kelvin.

In order to allow sufficient transfer of heat from the heat-dissipation layer 16 to the heat sink 121, the heat sink 121 can adjoin the heat-dissipation layer 16 (see heat sink $121_b$ in FIG. 12). Alternatively, as shown on heat sink $121_a$ in FIG. 12, sufficient heat can transfer to the heat sink 121 if the heat sink 121 is separated from the heat-dissipation layer 16 by material 122 with a small thermal resistance for heat conduction (R). For example R<1 K/W, R<10 K/W, R<50 K/W, R<100 K/W, where W=watt, K=degrees Kelvin, $R=L_{122}/(k*A_{122})$, $L_{122}$ is the length of the material 122 between the heat-dissipation layer 16 and the heat sink 121, $A_{122}$ is the area of the material for heat transfer (extending into the page of FIG. 12), and $k$ is the coefficient of thermal conductivity.

Addition of the heat-dissipation layer 16 can result in a drop in WGP performance. This drop in WGP performance can be avoided or mitigated by addition of an antireflection layer 131, located over the heat-dissipation layer 16, farther from the substrate 11 than the heat-dissipation layer 16, the heat-dissipation layer 16 being sandwiched between the antireflection layer and the array of wires 12, as shown on WGPs 130 and 140 in FIGs. 13-14. The heat-dissipation layer 16 can provide a base or foundation for applying the antireflection layer 131.

As shown on WGP 130 in FIG. 13, the antireflection layer 131 can include multiple thin-film layers 132 on the heat-dissipation layer 16. These thin-film layers 132 can extend continuously across the heat-dissipation layer 16 and can reduce reflection of incident light on the heat-dissipation layer 16. One example of a thin-film antireflection layer 131 is at least two pairs 133 of thin-film layers 132 with each pair 133 including a thin-film layer 132 of silicon dioxide and a thin-film layer 132 of 95% $ZrO_2$ plus 5% $TiO_2$. Examples of a thickness $Th_{132}$ of each layer is between 30 and 300 nanometers.

As shown on WGP 140 in FIG. 14, the antireflection layer 131 can include multiple protrusions 142, formed in an array, located on the heat-dissipation layer 16. The protrusions 141 can be designed for reducing reflection of incident light on the heat-dissipation layer 16. For example, each protrusion 141 can have a width $W_{142}$ and a height $H_{142}$ that are < 300 nm, < 700 nm, or < 1200 nm.

As shown in FIGs. 1-4, 6-7, 9-10, and 12-14, the reflective layer 14 can adjoin the absorptive layer 15. Alternatively, as shown in FIGs. 5 and 8, each of the wires 12 can further comprise a thermal-insulating layer 18 sandwiched between the reflective layer 14 and the absorptive layer 15. As shown in FIG. 11, each of the wires 12 can further comprise two thermal-insulating layers 18, with one sandwiched between the reflective layer 14 and the first absorptive layer $15_a$ and the other sandwiched between the reflective layer 14 and the second absorptive layer $15_b$. The thermal-insulating layer 18 can minimize heat transfer from the absorptive layer 15 to the reflective layer 14, thus minimizing the chance of melting the reflective layer 14. The thermal-insulating layer 18 can have a low coefficient of thermal conductivity, such as for example < 8 W/(m*K), < 4 W/(m*K), < 2 W/(m*K), or < 1.5 W/(m*K).

In order to improve heat transfer from the absorptive layer 15 to the heat-dissipation layer 16, there can be a large contact area between the two materials. For example, the heat-dissipation layer 16 can cover $\geq$ 50%, $\geq$ 80%, $\geq$ 90%, or $\geq$ 95% of an exposed surface of the absorptive layer 15, the exposed surface of the absorptive layer 15 being any surface of the absorptive layer 15 not in direct contact with the transparent substrate 11 or material of the array of wires 12 (e.g. the reflective layer 14 or the thermal-insulating layer 18).

## Claims

1. A wire grid polarizer, WGP, configured to polarize light incident thereon, the WGP comprising:

   an array of wires (12) over a face of a transparent substrate (11), with channels (13) between adjacent wires (12);
   each of the wires (12) including a reflective layer (14) and an absorptive layer (15);
   a heat-dissipation layer (16) located over the array of wires (12) and farther from the transparent substrate (11) than the array of wires (12) or located between the array of wires (12) and the transparent substrate (11); and
   the heat-dissipation layer (16) being a continuous layer having an electrical resistivity of greater than $10^6$ $\Omega$*cm, a coefficient of thermal conductivity of greater than 5 W/(m*K) and a thickness, $Th_{16}$, of $\leq$ 2000 nm.

2. The wire grid polarizer, WGP, of claim 1, wherein:

   the absorptive layer (15) is capable of generating heat from absorbed light; and
   the heat-dissipation layer (16) is capable of conducting the heat generated in the absorptive layer (15) away from the reflective layer (14).

3. The wire grid polarizer, WGP, of claim 1, wherein each of the channels (13) extends from a proximal end ($12_p$) of the array of wires (12) closest to transparent substrate (11) to a distal end ($12_d$) of the array of wires (12) farthest from transparent substrate (11).

4. The wire grid polarizer, WGP, of claim 1, wherein sidewalls ($12_s$) of each of the wires (12) extend from the reflective layer (14) to the absorptive layer (15) uninterrupted by any continuous layer in a plane parallel to the face of the transparent substrate (11).

5. The wire grid polarizer, WGP, of claim 1, wherein a volume of the heat-dissipation layer (16) is at least three times greater than a volume of the absorptive layer (15).

6. The wire grid polarizer, WGP, of claim 1, wherein the heat-dissipation layer (16) comprises at least 90% aluminum oxide.

7. The wire grid polarizer, WGP, of claim 1, wherein:

   the absorptive layer (15) is located closer to the heat-dissipation layer (16) than the reflective layer (14);
   each of the wires (12) further comprises a thermal-insulating layer (18) sandwiched between the reflective layer (14) and the absorptive layer (15), the thermal-insulating layer (18) having a coefficient of thermal conductivity of less than 4 W/(m*K).

8. The wire grid polarizer, WGP, of claim 1, wherein the absorptive layer (15) is sandwiched between the reflective layer (14) and the heat-dissipation layer (16) and the heat-dissipation layer (16) extends into the channels (13) and along sides of the absorptive layer (15) to directly contact the reflective layer (14).

9. The wire grid polarizer, WGP, of claim 1, wherein:

the absorptive layer (15) is sandwiched between the reflective layer (14) and the transparent substrate (11); and
the absorptive layer (15) adjoins the heat-dissipation layer (16) or the absorptive layer (15) is separated from the heat-dissipation layer (16) by material having thermal resistance for heat conduction of a unit area of less than $10^{-8}$ $K*m^2/W$.

10. The wire grid polarizer, WGP, of claim 1, wherein:

the reflective layer (14) is sandwiched between the absorptive layer (15) and the transparent substrate (11); and
the reflective layer (14) adjoins the heat-dissipation layer (16) or the reflective layer (14) is separated from the heat-dissipation layer (16) by material having thermal resistance for heat conduction of a unit area of less than $10^{-8}$ $K*m^2/W$.

11. The wire grid polarizer, WGP, of claim 1, wherein:

the absorptive layer (15) is a first absorptive layer ($15_a$);
each of the wires (12) further comprises a second absorptive layer ($15_b$);
the reflective layer (14) is sandwiched between the first absorptive layer ($15_a$) and the second absorptive layer ($15_b$);
the heat-dissipation layer (16) is a second heat-dissipation layer ($16_b$) located between the array of wires and the transparent substrate;
the WGP further comprises a first heat-dissipation layer ($16_a$) located over the array of wires (12) and farther from the transparent substrate (11), the first heat-dissipation layer ($16_a$) being a continuous layer having an electrical resistivity of greater than $10^6$ $\Omega*cm$ measured at 20 °C and a coefficient of thermal conductivity of greater than 5 W/(m*K) measured at 25 °C; and
the array of wires (12) is sandwiched between the first heat-dissipation layer ($16_a$) and the second heat-dissipation layer ($16_b$) with the first ab-

sorptive layer ($15_a$) located closer to the first heat-dissipation layer ($16_a$) and the second absorptive layer ($15_b$) located closer to the second heat-dissipation layer ($16_b$).

12. The wire grid polarizer, WGP, of claim 11, further comprising an antireflection layer (131) located over the first heat-dissipation layer (16) and farther from the transparent substrate (11) than the first heat-dissipation layer (16), the first heat-dissipation layer (16) being sandwiched between the antireflection layer (131) and the array of wires (12).

13. The wire grid polarizer, WGP, of claim 1, wherein the heat dissipation-layer (16) is located between the array of wires (12) and the transparent substrate (11).

14. The wire grid polarizer, WGP, of claim 1, wherein $Th_{16} \geq 100$ nm and $Th_{16} \leq 500$ nm.

15. The wire grid polarizer, WGP, of claim 1, wherein the heat-dissipation layer (16) is an optical thin film and adjoins the absorptive layer (15).

**Patentansprüche**

1. Drahtgitterpolarisator, WGP, der ausgestaltet ist zum Polarisieren von darauf einfallendem Licht, wobei der WGP umfasst:

eine Gruppierung von Drähten (12) über einer Fläche eines transparenten Substrats (11) mit Kanälen (13) zwischen benachbarten Drähten (12);
wobei jeder der Drähte (12) eine reflektierende Schicht (14) und eine absorbierende Schicht (15) einschließt;
eine Wärmeabfuhrschicht (16), die sich über der Gruppierung von Drähten (12) und weiter von dem transparenten Substrat (11) entfernt als die Gruppierung von Drähten (12) befindet oder zwischen der Gruppierung von Drähten (12) und dem transparenten Substrat (11) befindet; und
wobei die Wärmeabfuhrschicht (16) eine kontinuierliche Schicht mit einem spezifischen elektrischen Widerstand größer als $10^6$ $\Omega*cm$, einem Wärmeleitfähigkeitskoeffizienten größer als 5 W/(m*K) und einer Dicke, $Th_{16}$, $\leq 2000$ nm ist.

2. Drahtgitterpolarisator, WGP, nach Anspruch 1, wobei:

die absorbierende Schicht (15) in der Lage ist, aus absorbiertem Licht Wärme zu erzeugen; und
die Wärmeabfuhrschicht (16) in der Lage ist, die in der absorbierenden Schicht (15) erzeugte Wärme von der reflektierenden Schicht (14) weg zu leiten.

3. Drahtgitterpolarisator, WGP, nach Anspruch 1, wobei jeder der Kanäle (13) sich von einem proximalen Ende (12$_p$) der Gruppierung von Drähten (12), das dem transparenten Substrat (11) am nächsten ist, zu einem distalen Ende (12$_d$) der Gruppierung von Drähten (12), das von dem transparenten Substrat (11) am weitesten entfernt ist, erstreckt.

4. Drahtgitterpolarisator, WGP, nach Anspruch 1, wobei Seitenwände (12$_s$) von jedem der Drähte (12) sich ununterbrochen durch irgendeine kontinuierliche Schicht von der reflektierenden Schicht (14) zu der absorbierenden Schicht (15) in einer Ebene parallel zu der Fläche des transparenten Substrats (11) erstrecken.

5. Drahtgitterpolarisator, WGP, nach Anspruch 1, wobei ein Volumen der Wärmeabfuhrschicht (16) mindestens drei Mal größer als ein Volumen der absorbierenden Schicht (15) ist.

6. Drahtgitterpolarisator, WGP, nach Anspruch 1, wobei die Wärmeabfuhrschicht (16) mindestens 90 % Aluminiumoxid umfasst.

7. Drahtgitterpolarisator, WGP, nach Anspruch 1, wobei:

die absorbierende Schicht (15) sich näher an der Wärmeabfuhrschicht (16) befindet als die reflektierende Schicht (14);
jeder der Drähte (12) des Weiteren eine thermische Isolationsschicht (18) umfasst, die sandwichartig zwischen der reflektierenden Schicht (14) und der absorbierenden Schicht (15) liegt, wobei die thermische Isolationsschicht (18) einen Wärmeleitfähigkeitskoeffizienten kleiner als 4 W/(m*K) hat.

8. Drahtgitterpolarisator, WGP, nach Anspruch 1, wobei die absorbierende Schicht (15) sandwichartig zwischen der reflektierenden Schicht (14) und der Wärmeabfuhrschicht (16) liegt und die Wärmeabfuhrschicht (16) sich in die Kanäle (13) und entlang Seiten der absorbierenden Schicht (15) erstreckt, um die reflektierende Schicht (14) direkt zu kontaktieren.

9. Drahtgitterpolarisator, WGP, nach Anspruch 1, wobei:

die absorbierende Schicht (15) sandwichartig zwischen der reflektierenden Schicht (14) und dem transparenten Substrat (11) liegt; und

die absorbierende Schicht (15) an die Wärmeabfuhrschicht (16) angrenzt, oder die absorbierende Schicht (15) durch Material mit thermischem Widerstand für Wärmeleitung einer Einheitsfläche von weniger als 10$^{-8}$ K*m$^2$/W von der Wärmeabfuhrschicht (16) getrennt ist.

10. Drahtgitterpolarisator, WGP, nach Anspruch 1, wobei:

die reflektierende Schicht (14) sandwichartig zwischen der absorbierenden Schicht (15) und dem transparenten Substrat (11) liegt; und
die reflektierende Schicht (14) an die Wärmeabfuhrschicht (16) angrenzt, oder die reflektierende Schicht (14) durch Material mit thermischem Widerstand für Wärmeleitung einer Einheitsfläche von weniger als 10$^{-8}$ K*m$^2$/W von der Wärmeabfuhrschicht (16) getrennt ist.

11. Drahtgitterpolarisator, WGP, nach Anspruch 1, wobei:

die absorbierende Schicht (15) eine erste absorbierende Schicht (15$_a$) ist;
jeder der Drähte (12) des Weiteren eine zweite absorbierende Schicht (15$_b$) umfasst;
die reflektierende Schicht (14) sandwichartig zwischen der ersten absorbierenden Schicht (15$_a$) und der zweiten absorbierenden Schicht (15$_b$) liegt;
die Wärmeabfuhrschicht (16) eine zweite Wärmeabfuhrschicht (16$_b$) ist, die sich zwischen der Gruppierung von Drähten und dem transparenten Substrat befindet;
der WGP des Weiteren eine erste Wärmeabfuhrschicht (16$_a$) umfasst, die sich über der Gruppierung von Drähten (12) und weiter entfernt von dem transparenten Substrat (11) befindet, wobei die erste Wärmeabfuhrschicht (16$_a$) eine kontinuierliche Schicht mit einem spezifischen elektrischen Widerstand größer als 10$^6$ $\Omega$*cm, gemessen bei 20 °C, und einem Wärmeleitfähigkeitskoeffizienten größer als 5 W/(m*K) ist, gemessen bei 25 °C; und
die Gruppierung von Drähten (12) sandwichartig zwischen der ersten Wärmeabfuhrschicht (16$_a$) und der zweiten Wärmeabfuhrschicht (16$_b$) liegt, wobei sich die erste absorbierende Schicht (15$_a$) näher an der ersten Wärmeabfuhrschicht (16$_a$) befindet, und die zweite absorbierende Schicht (15$_b$) näher an der zweiten Wärmeabfuhrschicht (16$_b$) befindet.

12. Drahtgitterpolarisator, WGP, nach Anspruch 11, des Weiteren umfassend eine Antireflexionsschicht (131), die sich über der ersten Wärmeabfuhrschicht (16) und weiter von dem transparenten Substrat (11) entfernt als die erste Wärmeabfuhrschicht (16) befindet, wobei die erste Wärmeabfuhrschicht (16) sandwichartig zwischen der Antireflexionsschicht (131) und der Gruppierung von Drähten (12) liegt.

13. Drahtgitterpolarisator, WGP, nach Anspruch 1, wobei die Wärmeabfuhrschicht (16) sich zwischen der Gruppierung von Drähten (12) und dem transparenten Substrat (11) befindet.

14. Drahtgitterpolarisator, WGP, nach Anspruch 1, wobei $Th_{16} \geq 100$ nm und $Th_{16} \leq 500$ nm.

15. Drahtgitterpolarisator, WGP, nach Anspruch 1, wobei die Wärmeabfuhrschicht (16) eine optische Dünnschicht ist und an die absorbierende Schicht (15) grenzt.


**Revendications**

1. Polariseur à grille de fils, WGP, configuré pour polariser de la lumière incidente sur celui-ci, le WGP comprenant :

   un réseau de fils (12) sur une face d'un substrat transparent (11), avec des canaux (13) entre fils (12) adjacents ;
   chacun des fils (12) comportant une couche réfléchissante (14) et une couche absorbante (15) ;
   une couche de dissipation thermique (16) située sur le réseau de fils (12) et plus loin du substrat transparent (11) que le réseau de fils (12) ou située entre le réseau de fils (12) et le substrat transparent (11), et
   la couche de dissipation thermique (16) étant une couche continue ayant une résistivité électrique de plus de $10^6$ $\Omega$*cm, un coefficient de conductivité thermique de plus de 5 W/(m*K) et une épaisseur, $Th_{16}$, $\leq 2000$ nm.

2. Polariseur à grille de fils, WGP, de la revendication 1, dans lequel :

   la couche absorbante (15) peut générer de la chaleur à partir de lumière absorbée ; et
   la couche de dissipation thermique (16) peut conduire la chaleur générée dans la couche absorbante (15) loin de la couche réfléchissante (14).

3. Polariseur à grille de fils, WGP, de la revendication 1, dans lequel chacun des canaux (13) s'étend depuis une extrémité proximale ($12_p$) du réseau de fils (12) la plus proche du substrat transparent (11) jusqu'à une extrémité distale ($12_d$) du réseau de fils (12) la plus éloignée du substrat transparent (11).

4. Polariseur à grille de fils, WGP, de la revendication 1, dans lequel des parois latérales ($12_s$) de chacun des fils (12) s'étendent depuis la couche réfléchissante (14) jusqu'à la couche absorbante (15) sans interruption par une quelconque couche continue dans un plan parallèle à la face du substrat transparent (11).

5. Polariseur à grille de fils, WGP, de la revendication 1, dans lequel un volume de la couche de dissipation thermique (16) est au moins trois fois supérieur à un volume de la couche absorbante (15).

6. Polariseur à grille de fils, WGP, de la revendication 1, dans lequel la couche de dissipation thermique (16) comprend au moins 90 % d'oxyde d'aluminium.

7. Polariseur à grille de fils, WGP, de la revendication 1, dans lequel :

   la couche absorbante (15) est située plus près de la couche de dissipation thermique (16) que la couche réfléchissante (14) ;
   chacun des fils (12) comprend en outre une couche thermiquement isolante (18) intercalée entre la couche réfléchissante (14) et la couche absorbante (15), la couche thermiquement isolante (18) ayant un coefficient de conductivité thermique de moins de 4 W/(m*K).

8. Polariseur à grille de fils, WGP, de la revendication 1, dans lequel la couche absorbante (15) est intercalée entre la couche réfléchissante (14) et la couche de dissipation thermique (16) et la couche de dissipation thermique (16) s'étend à l'intérieur des canaux (13) et le long de côtés de la couche absorbante (15) pour être en contact direct avec la couche réfléchissante (14).

9. Polariseur à grille de fils, WGP, de la revendication 1, dans lequel :

   la couche absorbante (15) est intercalée entre la couche réfléchissante (14) et le substrat transparent (11) ; et
   la couche absorbante (15) jouxte la couche de dissipation thermique (16) ou la couche absorbante (15) est séparée de la couche de dissipation thermique (16) par un matériau ayant une résistance thermique pour la conduction de la chaleur d'une surface unitaire de moins de $10^{-8}$ K*m$^2$/W.

10. Polariseur à grille de fils, WGP, de la revendication 1, dans lequel :

   la couche réfléchissante (14) est intercalée entre la couche absorbante (15) et le substrat transparent (11) ; et

la couche réfléchissante (14) jouxte la couche de dissipation thermique (16) ou la couche réfléchissante (14) est séparée de la couche de dissipation thermique (16) par un matériau ayant une résistance thermique pour la conduction de la chaleur d'une surface unitaire de moins de $10^{-8}$ K*m$^2$/W.

11. Polariseur à grille de fils, WGP, de la revendication 1, dans lequel :

la couche absorbante (15) est une première couche absorbante ($15_a$) ;
chacun des fils (12) comprend en outre une deuxième couche absorbante ($15_b$) ;
la couche réfléchissante (14) est intercalée entre la première couche absorbante ($15_a$) et la deuxième couche absorbante ($15_b$) ;
la couche de dissipation thermique (16) est une deuxième couche de dissipation thermique ($16_b$) située entre le réseau de fils et le substrat transparent ;
le WGP comprend en outre une première couche de dissipation thermique ($16_a$) située sur le réseau de fils (12) et plus loin du substrat transparent (11), la première couche de dissipation thermique ($16_a$) étant une couche continue ayant une résistivité électrique de plus de $10^6$ $\Omega$*m, mesurée à 20 °C, et un coefficient de conductivité thermique de plus de 5 W/(m*K), mesuré à 25 °C ; et
le réseau de fils (12) est intercalé entre la première couche de dissipation thermique ($16_a$) et la deuxième couche de dissipation thermique ($16_b$) avec la première couche absorbante ($15_a$) située plus près de la première couche de dissipation thermique ($16_a$) et la deuxième couche absorbante ($15_b$) située plus près de la deuxième couche de dissipation thermique ($16_b$).

12. Polariseur à grille de fils, WGP, de la revendication 11, comprenant en outre une couche antireflet (131) située sur la première couche de dissipation thermique (16) et plus loin du substrat transparent (11) que la première couche de dissipation thermique (16), la première couche de dissipation thermique (16) étant intercalée entre la couche antireflet (131) et le réseau de fils (12).

13. Polariseur à grille de fils, WGP, de la revendication 1, dans lequel la couche de dissipation thermique (16) est située entre le réseau de fils (12) et le substrat transparent (11).

14. Polariseur à grille de fils, WGP, de la revendication 1, dans lequel $Th_{16} \geq 100$ nm et $Th_{16} \leq 500$ nm.

15. Polariseur à grille de fils, WGP, de la revendication 1, dans lequel la couche de dissipation thermique (16) est un film mince optique et jouxte la couche absorbante (15).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015199948 A1
- US 7961393 B
- US 8755113 B
- US 20120075699 A